Europäisches Patentamt

European Patent Office

Office européen des brevets

(11) Veröffentlichungsnummer: **0 215 188**
**A1**

# (12) EUROPÄISCHE PATENTANMELDUNG

(21) Anmeldenummer: 86106253.7

(22) Anmeldetag: 07.05.86

(51) Int. Cl.⁴: **G11B 5/53**

(30) Priorität: 19.08.85 DE 3529623

(43) Veröffentlichungstag der Anmeldung:
25.03.87 Patentblatt 87/13

(84) Benannte Vertragsstaaten:
DE FR GB

(71) Anmelder: GRUNDIG E.M.V.
Elektro-Mechanische Versuchsanstalt Max
Grundig holländ. Stiftung & Co. KG.
Kurgartenstrasse 37
D-8510 Fürth(DE)

(72) Erfinder: Krauss, Gerhard
Cadolzburger Strasse 8
D-8510 Fürth(DE)

(54) Verfahren zur gleichzeitigen Herstellung zweier zugeordneter Magnetköpfe für Videogeräte.

(57) Beschrieben wird ein Verfahren zur gleichzeitigen Herstellung zweier zugeordneter Magnetköpfe - Doppelkopf -für Videogeräte, wobei der Video-Doppelkopf 1 ein gemeinsames Kernelement 2 aufweist, das erst nach Aufbringen des Doppelkopfes auf einen Montageträger 14 mittels Laserstrahl getrennt wird.

FIG. 1

EP 0 215 188 A1

# VERFAHREN ZUR GLEICHZEITIGEN HERSTELLUNG ZWEIER ZUGEORDNETER MAGNETKÖPFE FÜR VIDEO-GERÄTE

Die Erfindung betrifft ein Verfahren zur gleichzeitigen Herstellung zweier zugeordneter Magnetköpfe für Videogeräte entsprechend dem Oberbegriff des Patentanspruchs 1.

Es sind Magnetköpfe bekannt, die einzeln aus vorgearbeiteten Kernblöcken hergestellt werden, und die in Zweiergruppen meist um 180° versetzt auf einem Kopfrad bzw. Kopftrommel eines Videogerätes paarweise eingesetzt werden. Die Verwendung von zwei zugeordneten Videoköpfen ist erforderlich, sofern die Geräte zur Erhöhung der Spielzeit mit unterschiedlicher, z. B. mit halbierter Bandgeschwindigkeit betreibbar sein sollen. Eine hierdurch vorgesehene Spielzeitverdoppelung erfordert bei einem eingeführten Videosystem eine Halbierung der Videospurbreite gegenüber der Spurbreite bei einer Normalgeschwindigkeit. Da ein derartiges Gerät für beide Bandgeschwindigkeiten ausgelegt sein soll, ist für beide Betriebsarten ein auf einem gemeinsamen Träger angeordnetes, elektrisch umschaltbares Video-Kopfpaar mit unterschiedlicher Kopfspaltbreite erforderlich, wobei die Videoköpfe einzeln auf den Träger aufgesetzt und justiert werden.

Aufgabe der Erfindung ist es daher, ein Verfahren zu finden, bei dem die Herstellung der paarweise zugeordneten Videoköpfe vereinfacht, und insbesondere das aufwendige Justieren der einzelnen Köpfe auf einem gemeinsamen Träger vermieden wird.

Diese Aufgabe wird erfindungsgemäß durch die im Kennzeichen des Patentanspruchs 1 angegebenen Merkmale gelöst.

Die Erfindung wird nachfolgend anhand von Zeichnungen näher erläutert.

Fig. 1 ist eine schematische Darstellung zweier zusammengefaßter Videoköpfe als Kernelement mit Wicklung, jedoch ohne Montageträger,

Fig. 2 ist eine perspektivische Darstellung einer Kernblockeinheit zur Herstellung eines Kernelementes nach Figur 1, jedoch vor dem Verbinden der einzelnen Blockteile,

Fig. 3 ist eine schematische Draufsicht auf eine verbundene Kernblockeinheit mit Hinweis zur Auftrennung in Kernelemente mit einer schrägen Spaltlage,

Fig. 4 ist eine schematische Draufsicht auf zwei gemeinsam auf einem Träger aufgeklebte Videoköpfe mit nachfolgender Trennung der Videoköpfe,

Fig. 5 ist eine schematische Draufsicht auf eine Kernblockeinheit ähnlich Figure 3, jedoch mit in der Mitte längs getrenntem und bei versetzter Spaltlage erneut zusammengefügter Kernblockeinheit, und

Fig. 6 ist eine schematische Draufsicht zweier verbundener Videoköpfe mit einem aus einer Kernblockeinheit nach Figur 5 getrennten Kernelement auf einem Träger montiert und mit einer teilweisen Trennung der beiden Kopfsysteme.

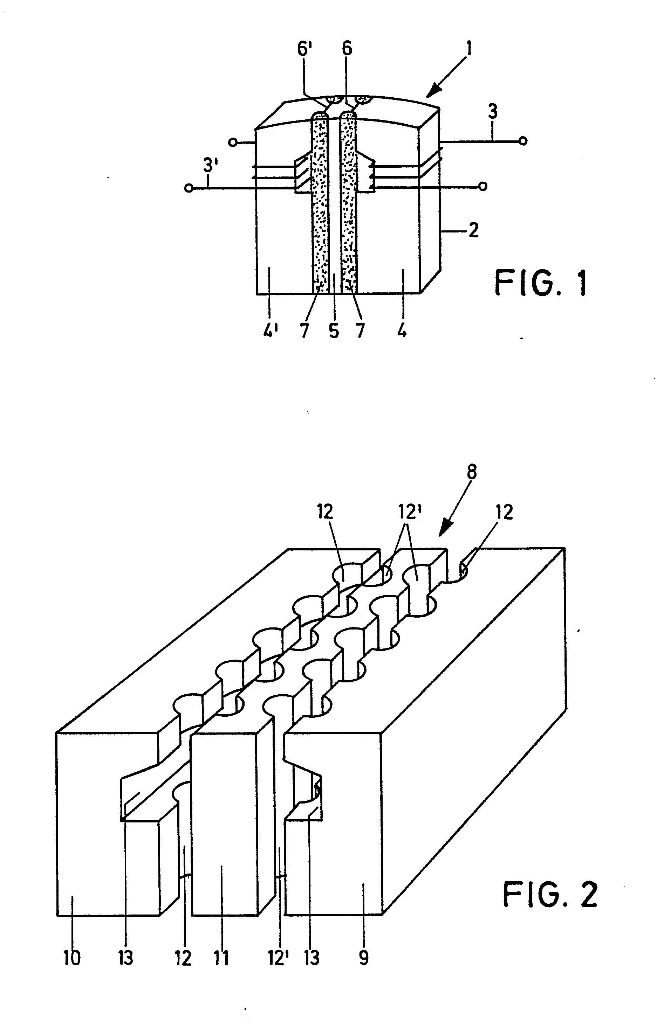

Die Figur 1 zeigt einen Video-Doppelkopf 1, der im wesentlichen aus einem Kernelement 2 und zweier Wicklungen 3 und 3' besteht. Das Kernelement setzt sich aus zwei Seitenteilen 4 und 4' und einem Mittelteil 5 zusammen. Die Teile des Kernelementes bestehen aus einer magnetischen Legierung. Die drei Teile sind durch zwei isolierende Spalte -Kopfnutzspalte 6, 6' -magnetisch getrennt und über ein Füllmaterial 7, das sich in besonders eingebrachten Nuten befindet, zu einem festen Verbund zusammengefügt. Das Kernelement 2 wird nach bekannten modernen Fertigungsverfahren aus einer Kernblockeinheit 8 durch scheibenweises Abtrennen gewonnen.

Die Figur 2 zeigt die Einzelteile einer Kernblockeinheit 8, von der ein Kernelement 2 abtrennbar ist. Die Blockeinheit besteht aus einem Paar von Kernblöcken 9,10 und einem Kernstreifen 11, die aus einer weichmagnetischen Legierung hergestellt sind. Die Kernblöcke weisen auf einer Oberfläche eine Vielzahl von parallel verlaufenden Nuten 12 und eine hierzu quer verlaufende Nut 13 auf. Zwischen beiden Kernblöcken 9, 10 befindet sich der Kernstreifen 11, der an zwei Oberflächen ebenfalls parallel verlaufende Nuten 12' aufweist. Die mit querlaufenden Nuten 12, 12' versehenen Oberflächen der beiden Kernblöcke und der Kernstreifen erhalten eine isolierende Auflage, die nach Zusammenfügen der Teile den Kopfnutzspalt bilden.

Das Zusammenhalten der Blockteile übernimmt ein Bindekörper, der sich in Form eines die Nuten 12, 12' ausfüllenden Füllmaterials 7, z. B. Glaslot - (siehe Fig.1) ergibt.

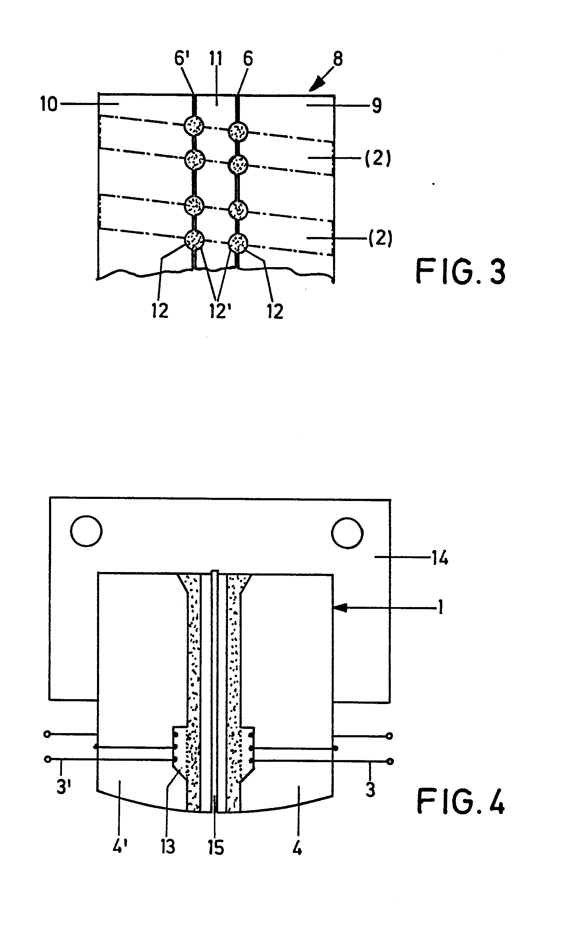

Die Figur 3 zeigt in Draufsicht eine Blockeinheit 8, die sich nach Ausfüllen der Nuten 12, 12' ergibt. Aus der Blockeinheit werden die einzelnen Kernelemente 2 abgetrennt (s.strichpunktierte Linie). Je nach gewünschter Spaltlage zur Außenfläche des Kernelements verläuft der Trennungsschnitt zur Außenfläche der Blockeinheit senkrecht oder zu dieser geneigt. Nach Einbringen der Wicklungen 3, 3' in die hierfür vorgesehenen Aussparungen (Nut 13) im Kernelement ist der Video-Doppelkopft im wesentlichen fertiggestellt.

Die Figur 4 zeigt wie der Video-Doppelkopf 1 nach seiner Fertigstellung auf einem Träger aufgesetzt, z. B. aufgeklebt, und mittels dieses Trägers an einer nicht dargestellten Kopftrommel eines Videogerätes befestigt ist. Nach dem Aufkleben des Magnetkopfes 1 -Doppelkopfes -auf einem Träger 14, wird der Magnetkopf und bedarfsweise auch ein Teil des Trägers 14, z. B. mittels eines Laserstrahls derart mittig durchtrennt, daß sich zwischen beiden Seitenteilen 4 und 4' ein Zwischenraum 15 ergibt. Beide Seitenteile 4 und 4' sind somit nur über den Träger 14 gehalten. Eine magnetische Kopplung beider Seitenteile 4, 4' wird durch Einbringen des Zwischenraumes 15 vermieden.

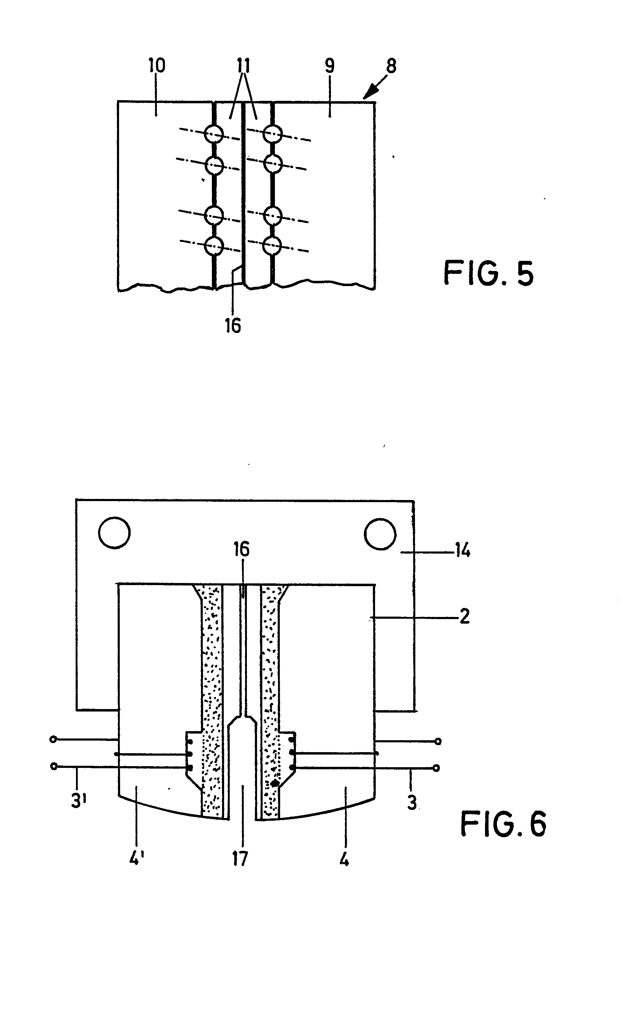

Nach Figur 5 wird eine derartige Trennung bereits an der Blockeinheit mittels Laserstrahls durch mittiges Durchtrennen und erneutem Verbinden beider Hälften unter Bildung eines isolierenden Spaltes 16 vorgenommen. Im dargestellten Beispiel sind die beiden Hälften in längs versetzter Form verbunden, um einen Video-Doppelkopf mit versetzter Spaltanordnung zu erhalten.

Die Figur 6 zeigt eine schematische Draufsicht auf einen Doppelkopf mit einem aus einem Kernblock nach Fig. 5 getrenntem Kernelement, wobei das Kernelement 2 auf einem Träger 14 aufgeklebt ist, und im Bereich der Wicklungen die beiden Kopfsysteme teilweise getrennt sind und somit an dieser Stelle einen erhöhten Zwischenraum 17 aufweisen.

**Ansprüche**

1. Verfahren zur gleichzeitigen Herstellung zweier zugeordneter Magnetköpfe für Videogeräte, wobei sich die Magnetköpfe vorzugsweise durch verschiedene z. B. halbierte Kopfspaltbreiten unterscheiden und nebeneinander auf einem gemeinsamen an der Kopftrommel des Videogerätes befindlichen Träger befestigt sind, **dadurch gekennzeichnet,** daß man

a) ein Paar von Kernblöcken (9, 10) aus einer magnetischen Legierung herstellt,

b) auf einer Oberfläche der beiden Kernblöcke (9, 10) eine Vielzahl von parallel zueinander verlaufenden Nuten (12) und eine hierzu quer verlaufende Nut (13) einbringt,

c) einen beidseitig mit einer Vielzahl von parallel verlaufenden Nuten (12') versehenen - schmalen Kernstreifen (11) aus einer magnetischen Legierung herstellt, diesen zwischen beiden Kernblöken (9, 10) einsetzt und diese Teil unter Bildung eines isolierenden Spaltes (6, 6') zu einer Kernblockeinheit (8) zusammenfaßt,

d) die so gewonnene Kernblockeinheit (8) durch Ausfüllen der Vielzahl der parallel verlaufenden Nuten (12, 12') durch Glas verbindet,

e) die Kernblockeinheit (8) in eine Vielzahl von Kernelementen (2) auftrennt,

f) eine Wicklung durch die beiden Nuten - (13) um beide Seitenteile (4, 4') eines Kernelementes (2) anbringt,

g) das Kernelement (2) auf einen Träger - (14) aufklebt,

h) mittels eines Laserstrahls das Kernelement (2) mittig derart durchtrennt, daß sich zwischen beiden Seitenteilen (4, 4') ein durchgehender Zwischenraum (15) ergibt, und beide Seitenteile (4, 4') nur über den Träger (14) verbunden sind.

2. Verfahren nach den Verfahrensschritten a) bis d) des Anspruchs 1, **dadurch gekennzeichnet,** daß man die nach den Verfahrensschritten a) bis d) gebildete Kernblockeinheit (8) mittels eines Laserstrahls mittig durchtrennt und beide Hälften unter Bildung eines isolierenden Spaltes (6, 6') in längs versetzter Form erneut zu einer Kernblockeinheit z. B. mittels Glaslot verbindet, daß man die Kernblockeinheit anschließend in eine Vielzahl von Kernelementen (2) auftrennt, daß man eine Wicklung durch die beiden Nuten (13) eines Kernelementes anbringt, und das Kernelement (2) auf einen Träger (14) aufklebt.

3. Verfahren nach Anspruch 2, **dadurch gekennzeichnet,** daß das auf einen Träger (14) aufgeklebte Kernelement (2) mittig in Längsrichtung teilweise im Wicklungsbereich mittels Laserstrahl aufgetrennt ist.

FIG. 1

FIG. 2

FIG. 3

FIG. 4

FIG. 5

FIG. 6

Europäisches
Patentamt

**EUROPÄISCHER RECHERCHENBERICHT**

Nummer der Anmeldung

EP 86106253.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | <u>GB - A - 2 099 204</u> (TOKYO SHIBAURA) <br> * Fig. 1,2,4-9; Zusammen- <br> fassung * <br> -- | 1 | G 11 B 5/53 |
| A | <u>EP - A2 - 0 149 509</u> (NGK <br> <u>INSULATORS</u>) <br> * Fig. 3,6,10,12; Zusammen- <br> fassung * <br> -- | 1 | |
| P,A | <u>EP - A1 - 0 157 498</u> (VICTOR) <br> * Fig. 1,2; Ansprüche 1-5 * <br> -- | 1 | |
| A | <u>DE - A1 - 2 813 193</u> (IBM) <br> * Fig. 4; Seite 12, Zeile 22 - <br> Seite 14, Zeile 30 * <br> ---- | 1 | |

RECHERCHIERTE
SACHGEBIETE (Int. Cl.4)

G 11 B 5/00

Der vorliegende Recherchenbericht wurde für alle Patentansprüche erstellt.

| Recherchenort | Abschlußdatum der Recherche | Prüfer |
|---|---|---|
| WIEN | 26-11-1986 | BERGER |